# EUROPÄISCHE PATENTSCHRIFT

(11) **EP 0 538 606 B1**
(45) Veröffentlichungstag und Bekanntmachung des Hinweises auf die Patenterteilung: **31.05.1995**
(21) Anmeldenummer: 92115233.6
(22) Anmeldetag: 05.09.1992
(51) Int. Cl.: B60T 13/58, B60T 13/68

(54) **Hydraulische Anhängerbremsanlage**
Hydraulic trailer brake
Frein hydraulique pour remorque

(30) Priorität: 23.10.1991 DE 4134920
(43) Veröffentlichungstag der Anmeldung: 28.04.1993
(73) Patentinhaber: ROBERT BOSCH GMBH, 70442 Stuttgart (DE)
(72) Erfinder: Kraus, Walter, W-7123 Sachsenheim 1 (DE); Sandau, Hartmut, Dipl.-Ing. (FH), W-7141 Schwieberdingen (DE); Trucksess, Rainer, Dipl.-Ing. (FH), W-7143 Vaihingen/Enz (DE)

(56) Entgegenhaltungen:
- DE-A- 2 726 514
- FR-A- 2 259 732

## Beschreibung

### Stand der Technik

Die Erfindung geht aus von einer hydraulischen Anhängerbremsanlage nach der Gattung des Hauptanspruchs. Aus der DE-OS 24 04 519 ist eine derartige hydraulische Anhängerbremsanlage bekannt, bei der die Verbindung zwischen Anhängerbremszylinder und Anhängerbremsleitung sowie zwischen Anhängerbremszylinder und Druckspeicher durch ein einziges Dreiwege-Zweistellungs-Magnetventil gesteuert wird. Das Aufladen des Druckspeichers erfolgt über ein Strombegrenzungsventil und ein Rückschlagventil wenn beim normalen Bremsen (Betriebsbremse) der Bremsdruck den Arbeitsdruck im Druckspeicher übersteigt. Dabei fließt dann immer ein relativ konstanter Teilstrom zum Druckspeicher, so daß dieser aufgeladen wird. Das hat den Nachteil, daß insbesondere bei hohem Bremsdruck (Notbremsung) nicht sofort der volle Bremsdruck am Anhängerbremszylinder zur Verfügung steht. Darüber hinaus beeinflussen sich die Steuerungsfunktionen des Dreistellungs-Zweiwege-Magnetventils auf die Verbindungen zwischen Anhängerbremszylinder und Anhängerbremsleitung einerseits und Anhängerbremszylinder und Druckspeicher andererseits gegenseitig.

### Vorteile der Erfindung

Die erfindungsgemäße hydraulische Anhängerbremsanlage mit den kennzeichnenden Merkmalen des Hauptanspruchs hat demgegenüber den Vorteil, daß die Steuerungsfunktionen für die Feststell- und Abreißbremse keine Einflüsse auf das Verhalten der Betriebsbremse des fahrbereiten Anhängers haben. Darüber hinaus steht bei einer Betriebsbremsung stets der volle Bremsdruck am Bremszylinder zur Verfügung.

Weitere Vorteile und vorteilhafte Weiterbildungen ergeben sich aus den Unteransprüchen und der Beschreibung.

### Zeichnung

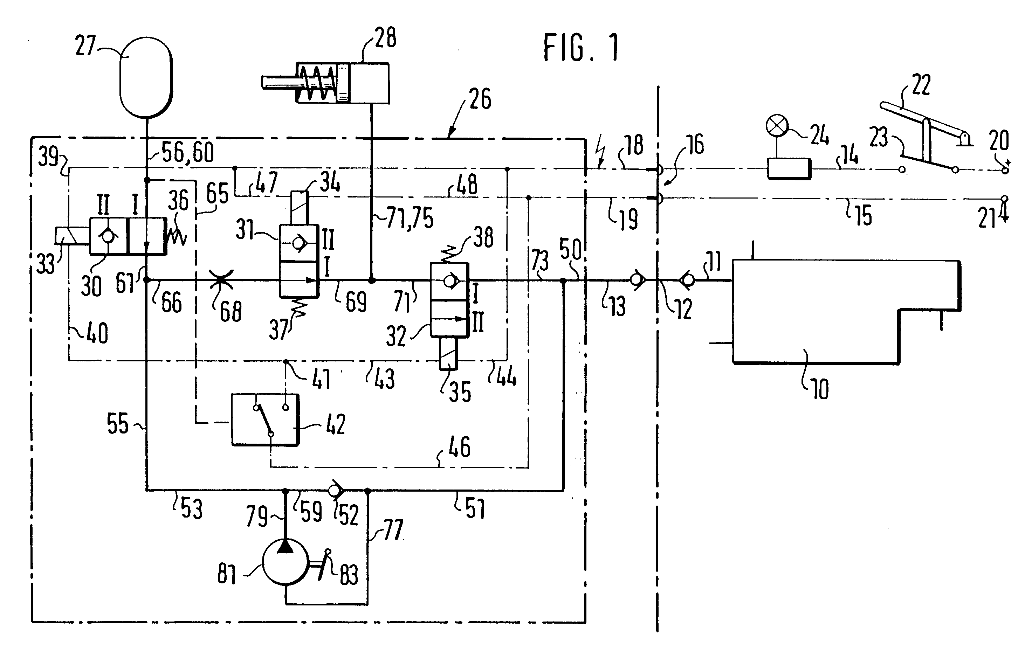

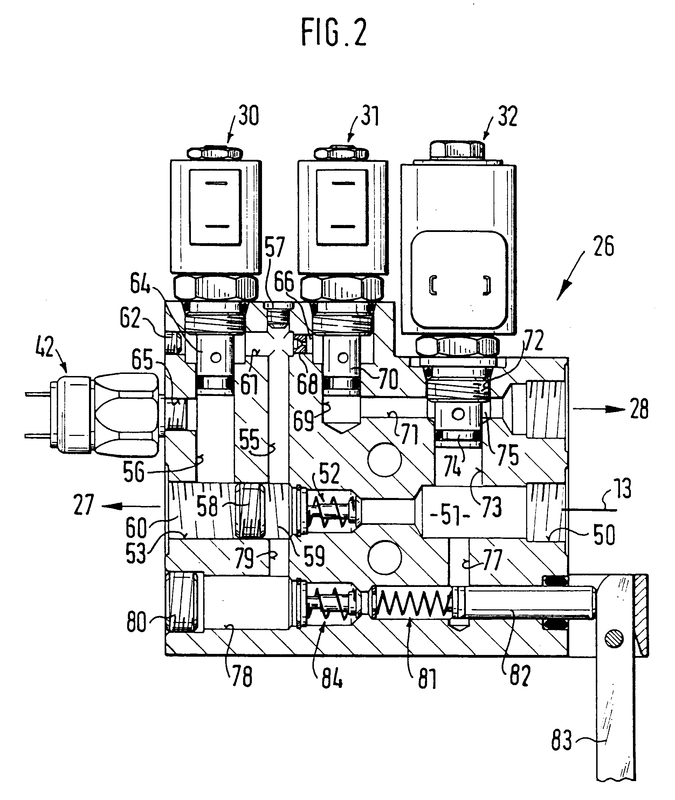

Ein Ausführungsbeispiel der Erfindung ist in der nachfolgenden Beschreibung und Zeichnung näher erläutert. Letztere zeigt in Figur 1 eine hydraulische Anhängerbremsanlage in schematischer Darstellung, in Figur 2 einen Schnitt durch einen Steuerblock der hydraulischen Anhängerbremsanlage.

### Beschreibung des Ausführungsbeispiels

In Figur 1 ist mit 10 ein an sich bekanntes Bremsventil bezeichnet, das auf bzw. an einem Zugfahrzeug befestigt ist. Von diesem Bremsventil 10 geht eine Bremsleitung 11 zu einer Kupplung 12, an die eine Anhängerbremsleitung 13 angekuppelt ist. Vom Zugfahrzeug geht weiterhin eine zweiadrige, elektrische Bremsleitung 14, 15 aus, die ebenfalls zu einer Kupplung 16 führt. An diese Kupplung 16 sind die zwei Adern 18, 19 der elektrischen Anhängerbremsleitung angekoppelt.

Die elektrische Bremsleitung 14, 15 ist mit einer Spannungsquelle des Zugfahrzeuges, beispielsweise der Batterie verbunden, wobei die eine Ader 14 der Bremsleitung mit dem Pluspol 20 und die andere Ader 15 mit dem Minuspol bzw. der Fahrzeugmasse 21 verbunden ist. In die Ader 14 der zugfahrzeugseitigen elektrischen Bremsleitung ist ein mit einer Handbremse 22 verbundener Schalter 23 eingesetzt, der sich bei betätigter (angezogener) Handbremse 22 in geöffnetem Zustand befindet. Darüber hinaus ist noch eine Kontrolleuchte 24 vorgesehen, die den Betätigungszustand der Handbremse 22 anzeigt.

Sowohl die Anhängerbremsleitung 13 als auch die elektrische Anhängerbremsleitung 18, 19 führen zu einem Steuerblock 26, der - auf noch näher zu erläuternde Weise - mit einem Druckspeicher 27 und einem Bremszylinder 28 verbunden ist.

In den in Figur 2 näher dargestellten Steuerblock 26 sind drei elektromagnetisch betätigbare Wegeventile 30 - 32 eingesetzt, die als 2/2-Wegeventile ausgebildet sind. Jedes der Wegeventile 30 - 32 kann durch entsprechende Bestromung des jeweiligen Elektromagneten 33 - 35 aus der in Figur 1 dargestellten Neutralstellung I gegen die Wirkung einer Druckfeder 36 - 38 in die (zweite) Schaltstellung II gebracht werden.

Der Elektromagnet 33 des ersten Wegeventils 30 ist über eine Anschlußleitung 39 mit der Ader 18 der elektrischen Anhängerbremsleitung verbunden. Eine zweite Anschlußleitung 40 führt zum Eingang 41 eines Druckschalters 42. An diesen Eingang 41 ist auch eine erste Leitung 43 des zum dritten Wegeventil 32 gehörenden Elektromagneten 35 angeschlossen. Dieser ist andererseits über eine zweite Leitung 44 mit der Anschlußleitung 39 bzw. der Ader 18 der elektrischen Anhängerbremsleitung verbunden. Ausgangsseitig ist der Druckschalter 42 über eine Verbindungsleitung 46 mit der zweiten Ader 19 der elektrischen Anhängerbremsleitung verbunden.

Der Elektromagnet 34 des zweiten Wegeventils 31 ist einerseits über einen Anschluß 47 mit der Anschlußleitung 39 und andererseits über einen Anschluß 48 mit der Ader 19 bzw. der Verbindungsleitung 46 verbunden.

Im Steuerblock 26 ist ein Hydraulikanschluß 50 ausgebildet, an den die Anhängerbremsleitung 13 angeschlossen ist. Von diesem führt ein Kanal 51 zu einem Rückschlagventil 52, das in eine zum Druckspeicher 27 führende Bohrung 53 (Figur 2) eingesetzt ist. Das Rückschlagventil 52 ist so ausgebildet, daß es bei einem Druckgefälle vom Kanal 51 zur Bohrung 53 hin öffnet.

In die Bohrung 53 münden zwei Bohrungen 55, 56, von denen die dem Rückschlagventil 52 zugewandte Bohrung 55 an ihrem gegenüberliegenden Ende durch einen Stopfen 57 verschlossen ist. Zwischen den Mündungen der Bohrungen 55, 56 in die Bohrung 53 ist in diese ein Dichtstopfen 58 eingesetzt, so daß in dieser ein dem Rückschlagventil 52 zugewandter Kanal 59 und ein abgewandter Kanal 60 ausgebildet sind. Der Kanal 59 und die Bohrung 55 führen über eine letztere durchdringende Querbohrung 61 zum ersten Wegeventil 30.

Dieses erste Wegeventil 30 ist in die Bohrung 56 eingesetzt, die ebenfalls von der durch einen Stopfen 62 verschlossenen Querbohrung 61 durchdrungen ist. Über die Bohrung 56 und den Kanal 60 ist das erste Wegeventil 30 mit dem Druckspeicher 27 verbunden. Das Ventilglied 64 des ersten Wegeventils 30 wirkt im Durchdringungsbereich der Bohrung 56 und der Querbohrung 61 derart mit diesen zusammen, daß beide Bohrungen in Neutralstellung I des Wegeventils 30 (Figur 1) miteinander verbunden sind. In der Schaltstellung II, d. h. bei betätigtem Elektromagneten 33, wirkt das Ventilglied 64 als Rückschlagventil, das bei einer Strömung von der Querbohrung 61 zur Bohrung 56 schließt.

In die Bohrung 56 mündet zwischen dem Kanal 60 und dem Ventilglied 64 eine weitere Querbohrung 65, die zum Druckschalter 42 führt. Dieser ist so ausgelegt, daß er unterhalb eines festgelegten Druckes (Schaltdruck) offen ist und bei Erreichen des Schaltdruckes geschlossen wird. Im geschlossenen Zustand des Druckschalters 42 sind dann der Eingang 41 und die Verbindungsleitung 46 verbunden.

Die Querbohrung 61 ist so ausgebildet, daß sie mit einem Ab- schnitt 66, in den eine Drossel 68 eingesetzt ist, bis in eine Boh- rung 69 dringt. In diese ist das zweite Wegeventil 31 eingesetzt. Dessen Ventilglied 70 ist so ausgebildet, daß es in Neutralstellung I (Figur 1) den Abschnitt 66 und die Bohrung 69 verbindet. In Schaltstellung II, d. h. bei bestromten Elektromagneten 34, wirkt das Ventilglied 70 als Rückschlagventil, das bei einer Strömung vom Abschnitt 66 zur Bohrung 69 schließt.

In die Bohrung 69 mündet unterhalb des zweiten Wegeventils 31 eine Querbohrung 71, die zum Bremszylinder 28 führt. Die Querbohrung 71 ist von einer Bohrung 72 durchdrungen, die in eine achsgleich verlaufende Bohrung 73 kleineren Durchmessers übergeht. Letztere mündet in den Kanal 51. In die Bohrung 72 ist das dritte Wegeventil 32 eingesetzt, dessen Ventilglied 74 in die Bohrung 73 ragt. Dieses Ventilglied 74 ist so ausgebildet, daß es in Neutralstellung I (Figur 1) als Rückschlagventil wirkt, das bei einer Strömung von der Bohrung 73 zur Querbohrung 71 öffnet. In Schaltstellung II, d. h. bei stromdurchflossenem Elektromagneten 35, sind die Bohrung 73 und die Querbohrung 71 auch bei umgekehrter Strömungsrichtung verbunden, d. h. das Wegeventil 32 bzw. dessen Ventilglied 74 gibt den Durchfluß frei.

Das Ventilglied 74 ist so ausgebildet, daß die Bohrung 69 und der Bremszylinder 28 in jeder Schaltstellung (Neutralstellung I oder zweite Schaltstellung II) miteinander verbunden sind, und zwar über die Querbohrung 71 und den Ringraum 75 zwischen Bohrung 72 und Ventilglied 74.

Vom Kanal 51 geht eine achsgleich zur Bohrung 73 verlaufende Sackbohrung 77 aus, die eine durchgängig im Steuerblock verlaufende Pumpenbohrung 78 durchdringt. In diese Pumpenbohrung 78 mündet eine Bohrung 79, die vom Kanal 59 ausgeht und achsgleich zur Bohrung 55 verläuft. Die Pumpenbohrung 78, die einseitig durch einen Stopfen 80 verschlossen ist, ist Teil einer Handpumpe 81. Von der dem Stopfen 80 gegenüberliegenden Seite ragt ein Pumpenstößel 82 in die Pumpenbohrung 78, der mit einem Betätigungshebel 83 bewegt werden kann. Der Pumpenstößel 82 wirkt mit einem Pumpenventil 84 zusammen, das als Rückschlagventil ausgebildet ist und bei einer Strömung von der Bohrung 79 zur Sackbohrung 77 schließt.

Ist die Handbremse 22 am Zugfahrzeug - wie in Figur 1 dargestellt - angezogen, sind die Elektromagnete 33 - 35 der Wegeventile 30 - 32 stromlos. Dadurch befinden sich die drei Wegeventile 30 - 32 in ihrer federbelasteten (Druckfedern 36 - 38) Neutralstellung I. Der Bremszylinder 28 ist dann über die Querbohrung 71 und den Ringraum 75 und über die Bohrung 69 mit dem zweiten Wegeventil 31 verbunden. Das dritte Wegeventil 32 wirkt in seiner Neutralstellung I als Rückschlagventil, das eine Druckmittelströmung von der Querbohrung 71 zur Bohrung 73 verhindert. Das zweite Wegeventil 31 verbindet in seiner Neutralstellung die Bohrung 69 mit dem Abschnitt 66 der Querbohrung 61. Der Abschnitt 66 mit Drossel 68 ist einerseits über die Bohrung 55 mit dem Kanal 59 und dem Rückschlagventil 52 verbunden. Eine zweite Verbindung führt über die Querbohrung 61 und das in Neutralstellung I befindliche erste Wegeventil 30 zur Bohrung 56 und dem Kanal 60 und damit zum Druckspeicher 27. Damit sind bei angezogener Handbremse 22 der Druckspeicher 27 und der Bremszylinder 28 verbunden, so daß die Bremsen des Anhängers betätigt werden.

Wird die Handbremse 22 gelöst, wird dadurch der Elektromagnet 34 des zweiten Wegeventils 31 aufgrund des geschlossenen Stromkreises über die Adern 14 und 18 bzw. 15 und 19 sowie die Anschlüsse 47 und 48 von einem Strom durchflossen. Das zweite Wegeventil 31 schaltet somit in die Schaltstellung II, d. h. es wirkt als Rückschlagventil und verhindert eine Druckmittelströmung von der Bohrung 66 zur Bohrung 69.

Der Bremszylinder 28 wird aufgrund der Wirkung des Druckschalters 42 jedoch nicht entlastet, solange der Druckspeicher 27 nicht auf einen vorbestimmten Druck aufgeladen ist. Der Druck im Druckspeicher 27 kann über Betätigen des Bremsventils 10 (Bremspedal treten) erhöht werden. Dabei ist das Bremsventil 10 über die Bremsleitung 11, die Kupplung 12, die Anhängerbremsleitung 13 sowie den Hydraulikanschluß 50 und die Bohrung 73 mit dem dritten Wegeventil 32 verbunden. Dieses befindet sich in der Neutralstellung I und wirkt somit als Rückschlagventil, das bei einer Druckmittelströmung vom Bremsventil 10 zum Bremszylinder 28 öffnet. Über die Querbohrung 71 und die Bohrung 69 besteht weiterhin eine Verbindung zum zweiten Wegeventil 31, das sich in Schaltstellung II befindet. Von dort führen der Abschnitt 66 und die Querbohrung 61 über das erste Wegeventil 30 und die Bohrung 56 sowie den Kanal 60 zum Druckspeicher 27, der damit aufgeladen wird. Ein Druckmittelrückfluß vom Druckspeicher 27 zum Bremsventil 10 wird durch das Rückschlagventil 52 und das als Rückschlagventil wirkende dritte Wegeventil 32 verhindert.

Ist der vorgegebene (vorgeschriebene) Speicherdruck erreicht, schaltet der Druckschalter 42 in seine Schließstellung, d. h. der Eingang 41 und die Verbindungsleitung 46 sind miteinander verbunden. Damit werden die Elektromagnete 33 bzw. 35 der Wegeventile 30 bzw. 32 stromdurchflossen, so daß diese in Schaltstellung II schalten. Damit befindet sich das dritte Wegeventil 32 in Durchgangsstellung, während das erste Wegeventil 30 als Rückschlagventil wirkt. Der Bremszylinder 28 kann damit über die Querbohrung 71 und den Ringraum 75 sowie das dritte Wegeventil 32 und die Bohrung 73, den Hydraulikanschluß 50, die Anhängerbremsleitung 13, die Kupplung 12 und die Bremsleitung 11 zum Bremsventil 10 entlastet, d. h. gelöst, werden. Ein Abströmen von Druckmittel aus dem Druckspeicher 27 wird durch das Rückschlagventil 52 und das in Schaltstellung II befindliche - und damit als Rückschlagventil wirkende - zweite Wegeventil 31 verhindert.

Bei Betätigen des Bremsventils 10 kann der Druck über die vorbeschriebene Leitungsverbindung über das in Durchgangsstellung (Schaltstellung II) geschaltete dritte Wegeventil 32 im Bremszylinder 28 wirken. Paralleles Aufladen des Druckspeichers 27 wird durch das geschaltete erste Wegeventil 30 (Rückschlagventil) verhindert. Damit wird das Ansprechen der Betriebsbremse 28 nie verzögert, und der volle Bremsdruck des Bremsventils steht zur Bremsung stets zur Verfügung.

Ist der Anhänger abgestellt und somit abgekuppelt, kann sich bei längerer Standzeit über Leckverluste des dritten Wegeventils 32 Druck bis zur Anhängerbremsleitung 13 bzw. bis zur Kupplung 12 aufbauen. Dadurch ist dann ein Wiederankuppeln erschwert oder nicht möglich. Durch Betätigung der Handpumpe 81 kann die Anhängerbremsleitung 13 entlastet werden.

Beim Abreißen des Anhängers wird der elektrische Stromkreis unterbrochen, so daß die Wegeventile 30 - 32 in ihre federbelastete Neutralstellung I schalten. Damit wird der Bremszylinder 28 mit dem Druckspeicher 27 verbunden, so daß die Bremsen betätigt werden (Abreißbremse). Durch die Drossel 68 im Abschnitt 66 der Querbohrung 61 wird der Druckaufbau im Bremszylinder 28 in vorteilhafter Weise gesteuert, so daß ein schlagartiges Einsetzen der Sicherheitsbremsung (Abreißbremse) verhindert wird.

Durch den beschriebenen Aufbau der Anhängerbremsanlage ist gewährleistet, daß die Anhängerbremse erst gelöst werden kann, wenn der Druckspeicher 27 mit dem vorgeschriebenen Druck aufgeladen ist, so daß die Handbrems- und Abreißbremsfunktion sichergestellt sind. Bei angekuppeltem Anhänger und aufgeladenem Druckspeicher 27 bleiben die Hand- und Abreißbremsfunktionen bzw. deren Komponenten ohne Einfluß auf das Verhalten der Betriebsbremse.

## Patentansprüche

1. Hydraulische Anhängerbremsanlage, bei der mindestens ein Bremszylinder (28) über eine Anhängerbremsleitung (13) von einem auf einem Zugfahrzeug befindlichen Bremsventil (10) beaufschlagbar ist, mit einem Druckspeicher (27), der über eine Leitungsverbindung mit dem Bremszylinder und der Anhängerbremsleitung verbunden ist, und bei der mindestens ein elektromagnetisch betätigbares Ventil (30 - 32) die Verbindung zwischen Anhängerbremsleitung und Bremszylinder und zwischen Bremszylinder und Druckspeicher steuert, wobei das elektromagnetisch betätigbare Ventil über eine Elektrokupplung (16) und einen Schalter (23) mit einer auf dem Zugfahrzeug befindlichen Stromquelle (20, 21) verbunden ist, dadurch gekennzeichnet, daß zwischen Bremszylinder (28) und Druckspeicher (27) ein erstes und ein zweites elektromagnetisch betätigbares Ventil (30, 31) angeordnet sind, daß zwischen Bremszylinder (28) und Anhängerbremsleitung (13) ein drittes Wegeventil (32) geschaltet ist, und daß die Elektromagnete (33, 35) des ersten und dritten Wegeventils (30, 32) über mindestens einen zusätzlichen Schalter (42) mit der Stromquelle verbunden sind.

2. Hydraulische Anhängerbremsanlage nach Anspruch 1, dadurch gekennzeichnet, daß der zusätzliche Schalter (42) in Abhängigkeit vom Druck im Druckspeicher (27) geschaltet wird.

3. Hydraulische Anhängerbremsanlage nach Anspruch 1 oder 2, dadurch gekennzeichnet, daß das dritte zwischen Bremszylinder (28) und Anhängerbremsleitung (13) angeordnete, elektromagnetisch betätigbare Ventil (32) in der ersten federbelasteten Neutralstellung I als Rückschlagventil einen Druckmittelstrom vom Bremszylinder (28) zur Anhängerbremsleitung (13) verhindert und in der zweiten Schaltstellung II, bei stromdurchflossenen Elektromagneten (35), einen Durchfluß freigibt.

4. Hydraulische Anhängerbremsanlage nach einem der Ansprüche 1 bis 3, dadurch gekennzeichnet, daß das erste zwischen Druckspeicher (27) und Bremszylinder (28) angeordnete elektromagnetisch betätigbare Ventil (30) in der ersten federbelasteten Neutralstellung I einen Durchfluß freigibt und in der zweiten Schaltstellung II, bei stromdurchflossenem Elektromagneten (33), als Rückschlagventil einen Druckmittelstrom vom Bremsventil zum Druckspeicher (27) verhindert.

5. Hydraulische Anhängerbremsanlage nach einem der Ansprüche 1 bis 4, dadurch gekennzeichnet, daß das zweite zwischen Druckspeicher (27) und Bremszylinder (28) angeordnete Ventil (31) in der ersten, federbelasteten Neutralstellung I einen Durchfluß freigibt und in der zweiten Schaltstellung II, bei stromdurchflossenen Elektromagneten (34) als Rückschlagventil einen Druckmittelstrom vom Druckspeicher zum Bremszylinder verhindert.

6. Hydraulische Anhängerbremsanlage nach einem der Ansprüche 1 bis 5, dadurch gekennzeichnet, daß das erste Ventil (30) zwischen dem Druckspeicher (27) und dem zweiten Ventil (31) angeordnet ist.

7. Hydraulische Anhängerbremsanlage nach einem der Ansprüche 1 bis 6, dadurch gekennzeichnet, daß zwischen dem zweiten Ventil (31) und dem dritten Ventil (32) eine Leitungsverbindung (69, 71) besteht.

8. Hydraulische Anhängerbremsanlage nach Anspruch 7, dadurch gekennzeichnet, daß von der Leitungsverbindung (69, 71) zwischen dem zweiten Ventil (31) und dem dritten Ventil (32) eine Leitungsverbindung (71, 75) zum Bremszylinder (28) abzweigt.

9. Hydraulische Anhängerbremsanlage nach einem der Ansprüche 1 bis 8, dadurch gekennzeichnet, daß zwischen dem ersten Ventil (30) und dem zweiten Ventil (31) eine Drossel (68) angeordnet ist.

10. Hydraulische Anhängerbremsanlage nach einem der Ansprüche 1 bis 9, dadurch gekennzeichnet, daß die Anhängerbremsleitung (13) in abgekuppeltem Zustand durch eine Handpumpe (81) entlastbar ist.

## Claims

1. Hydraulic trailer brake system in which at least one brake cylinder (28) can be acted on via a trailer brake line (13) by a brake valve (10) which is located on a towing vehicle, with a pressure accumulator (27) which is connected via a line connection to the brake cylinder and the trailer brake line, and in which at least one electromagnetically activated valve (30 - 32) controls the connection between trailer brake line and brake cylinder and between brake cylinder and pressure accumulator, the electromagnetically activated valve being connected via an electric coupling (16) and a switch (23) to a current source (20, 21) which is located on the towing vehicle, characterized in that a first and a second electromagnetically activated valve (30, 31) are arranged between brake cylinder (28) and pressure accumulator (27), in that a third directional control valve (32) is connected between brake cylinder (28) and trailer brake line (13), and in that the electromagnets (33, 35) of the first and third directional control valves (30, 32) are connected to the current source via at least one additional switch (42).

2. Hydraulic trailer brake system according to Claim 1, characterized in that the additional switch (42) is switched as a function of the pressure in the pressure accumulator (27).

3. Hydraulic trailer brake system according to Claim 1 or 2, characterized in that the third electromagnetically activated valve (32) which is arranged between brake cylinder (28) and trailer brake line (13) prevents, in a first spring-loaded neutral position I as a non-return valve, a flow of pressure medium from the brake cylinder (28) to the trailer brake line (13) and in the second switched position II, when the electromagnet (35) has current flowing through it, clears an opening.

4. Hydraulic trailer brake system according to one of Claims 1 to 3, characterized in that the first electromagnetically activated valve (30) which is arranged between pressure accumulator (27) and brake cylinder (28) clears an opening in the first spring-loaded neutral position I, and prevents a flow of pressure medium from the brake valve to the pressure accumulator (27) in the second switched position II, as a non-return valve, when the electromagnet (33) has current flowing through it.

5. Hydraulic trailer brake system according to one of Claims 1 to 4, characterized in that the second valve (31) which is arranged between pressure accumulator (27) and brake cylinder (28) clears an opening in the first, spring-loaded neutral position I and prevents a flow of pressure medium from the pressure accumulator to the brake cylinder in the second switched position II, as a non-return valve, when the electromagnet (34) has current flowing through it.

6. Hydraulic trailer brake system according to one of Claims 1 to 5, characterized in that the first valve (30) is arranged between the pressure accumulator (27) and the second valve (31).

7. Hydraulic trailer brake system according to one of Claims 1 to 6, characterized in that there is a line connection (69, 71) between the second valve (31) and the third valve (32).

8. Hydraulic trailer brake system according to Claim 7, characterized in that a line connection (71, 75) branches off to the brake cylinder (28) from the line connection (69, 71) between the second valve (31) and the third valve (32).

9. Hydraulic trailer brake system according to one of Claims 1 to 8, characterized in that a throttle (68) is arranged between the first valve (30) and the second valve (31).

10. Hydraulic trailer brake system according to one of Claims 1 to 9, characterized in that the trailer brake line (13) can be relieved in the uncoupled state by means of a hand-operated pump (81).

## Revendications

1. Frein hydraulique de remorque dont au moins un cylindre de frein (28) peut être sollicité par l'intermédiaire d'une conduite de frein de remorque (13) par une soupape de frein (10) du véhicule-tracteur, avec un accumulateur de pression (27) relié par une conduite de liaison au cylindre de frein et à la conduite de frein de remorque, et au moins une soupape à commande électromagnétique (30-32) commande la liaison entre la conduite de frein de remorque et le cylindre de frein ou entre le cylindre de frein et l'accumulateur de pression, la soupape à commande électromagnétique étant reliée par un accouplement électrique (16) et un commutateur (23) à une source de courant (20, 21) du véhicule-tracteur, caractérisé en ce qu'entre le cylindre de frein (28) et l'accumulateur de pression (27), se trouvent un premier et un second distributeur à commande électromagnétique (30, 31), entre le cylindre de frein (28) et la conduite de frein de remorque (13), il y a un troisième distributeur à tiroir (32) et en ce que les électro-aimants (33, 35) du premier et du troisième distributeur (30, 32) sont reliés à la source de courant par au moins un commutateur supplémentaire (42).

2. Frein hydraulique de remorque selon la revendication 1, caractérisé en ce que le commutateur supplémentaire (42) est commuté en fonction de la pression régnant dans l'accumulateur de pression (27).

3. Frein hydraulique de remorque selon la revendication 1 ou 2, caractérisé en ce que le troisième distributeur (32) à commande électromagnétique prévu entre le cylindre de frein (28) et la conduite de frein de remorque (13) fonctionne comme clapet anti-retour dans sa première position neutre (I), chargé par ressort, et interdit un passage de fluide sous pression du cylindre de frein (28) vers la ligne de frein de remorque (13) et dans sa seconde position de commutation (II) lorsque l'électro-aimant (35) est traversé par le courant, le distributeur libère le passage de fluide.

4. Frein hydraulique de remorque selon l'une des revendications 1 à 3, caractérisé en ce que le premier distributeur à commande électromagnétique (30) prévu entre l'accumulateur de pression (27) et le cylindre de frein (28) libère le passage dans sa première position neutre (I) chargée par ressort et interdit le passage de fluide sous pression de la soupape de frein vers l'accumulateur de pression (27) dans la seconde position de commutation (II), lorsque l'électro-aimant (33) est alimenté en courant, le distributeur fonctionnant comme clapet anti-retour.

5. Frein hydraulique de remorque selon l'une des revendications 1 à 4, caractérisé en ce que le second distributeur (31) prévu entre l'accumulateur de pression (27) et le cylindre de frein (28) libère le passage de fluide lorsqu'il occupe sa première position neutre (I) chargée par ressort alors que dans sa deuxième position de commutation (II), lorsque l'électro-aimant (34) est alimenté en courant, il fonctionne comme clapet anti-retour et interdit le passage de fluide sous pression de l'accumulateur de pression vers le cylindre de frein.

6. Frein hydraulique selon l'une des revendications 1 à 5, caractérisé en ce que le premier distributeur (30) est prévu entre l'accumulateur de pression (27) et le second distributeur (31).

7. Frein hydraulique de remorque selon l'une des revendications 1 à 6, caractérisé par une conduite de liaison (69, 71) entre le second distributeur (31) et le troisième distributeur (32).

8. Frein hydraulique de remorque selon la revendication 7, caractérisé par une conduite de liaison (71, 75) vers le cylindre de frein (28) dérivant de la conduite de liaison (69, 71) reliant le second distributeur (31) et le troisième distributeur (32).

9. Frein hydraulique selon l'une des revendications 1 à 8, caractérisé par un organe d'étranglement (68) entre le premier distributeur (30) et le second distributeur (31).

10. Frein hydraulique de remorque selon l'une des revendications 1 à 9, caractérisé en ce que la conduite de frein de remorque (13) peut se décharger par une pompe à main (81) lorsque la conduite est à l'état non accouplé.
